# EUROPEAN PATENT SPECIFICATION

(11) **EP 2 452 927 B1**
(45) Date of publication and mention of the grant of the patent: **17.12.2014**
(21) Application number: 10797187.1
(22) Date of filing: 08.07.2010
(51) Int. Cl.: C03B 17/06, C03B 35/18, C03B 40/04

(54) **PLATE GLASS MANUFACTURING DEVICE AND PLATE GLASS MANUFACTURING METHOD**
PLATTENGLASHERSTELLUNGSVORRICHTUNG UND PLATTENGLASHERSTELLUNGSVERFAHREN
DISPOSITIF DE FABRICATION DE GLACES ET PROCÉDÉ DE FABRICATION DE GLACES

(30) Priority: 09.07.2009 JP 2009162752
(43) Date of publication of application: 16.05.2012
(73) Proprietor: Asahi Glass Company, Limited, Tokyo 100-8405 (JP)
(72) Inventor: SHIRAISHI Yoshihiro, Tokyo 100-8405 (JP); TAKAHASHI Kunihisa, Tokyo 100-8405 (JP)
(74) Representative: Müller-Boré & Partner Patentanwälte PartG mbB
(86) International application number: PCT/JP2010/061642
(87) International publication number: WO 2011/004876

(56) References cited:
- EP-A1- 1 516 858
- JP-A- 2002 047 020
- JP-A- 2002 047 020
- JP-A- 2002 047 020
- JP-A- 2002 193 630
- JP-A- 2004 026 534
- US-A- 1 767 094
- US-A- 1 818 153
- US-A- 3 346 359

## Description

### TECHNICAL FIELD

The present invention relates to a flat glass production apparatus and a process for producing a flat glass, and more particularly, it relates to a flat glass production apparatus and a process for producing a flat glass in which molten glass is formed into a glass ribbon by using tension rollers.

### BACKGROUND ART

As processes for forming a glass ribbon, an up draw process, a down draw process, a fusion process and a tin float process are conventionally known, and in addition, a flat glass production apparatus in which molten glass supplied from a molten glass supply part is formed into a glass ribbon by using rollers has been proposed as disclosed in JP-A-2001-180949 (hereinafter referred to as the '949 publication) and JP-A-2006-28008 (hereinafter referred to as the '008 publication). It is noted that a glass ribbon herein means a plate-shaped glass continuous in the form of a ribbon obtained after substantially defining its shape from a state of low viscosity attained immediately after being carried out from a melting furnace.

In the flat glass production apparatus disclosed in the '949 publication or the '008 publication, molten glass is sandwiched between pressure rollers disposed above and below, and the molten glass is rolled out by the pressure of the rollers to be formed into a glass ribbon in a thin plate shape.

In the pressure rollers of the '949 publication, a circumferential face of its roll body is made of a roll base capable of containing water therein, and both end portions of each roller are made of a base not containing water, so that the water introduced into the roll base may be instantaneously vaporized from the roller circumferential face due to the heat of the molten glass. Therefore, a thin layer of a steam film is formed between the molten glass and the roller and a heat insulating barrier is formed by the thin layer of the steam film, and hence, the molten glass may be prevented from being abruptly cooled. Furthermore, since the thin layer of the steam film is formed between the molten glass and each of the rollers, the surfaces of the rollers may be prevented from directly coming into contact with the molten glass, which leads to an advantage that a contact trace, wrinkles and irregularities of the roller are never transcribed onto the face of the formed glass ribbon.

The pressure rollers of the '008 publication are basically the same in the structure as the pressure rollers of the '949 publication, and the gas pressure of a gas cushion of one of the rollers disposed above and below is adjusted so that a linear contact portion may be formed in parallel to the shaft of that roller between the roller and the molten glass.

At this point, the pressure rollers mean a pair of rollers disposed in the horizontal direction above and below a glass ribbon so that a plane formed by connecting the center shafts of the two rollers may be substantially vertical to a face of the glass ribbon and that the minimum distance between the circumferential faces of the two rollers may be substantially equal to an estimated ultimate thickness of the glass ribbon. When a pair of rollers are disposed in such positions, the glass ribbon is rolled out through roller pressures applied by the rollers disposed above and blow it. In other words, the flat glass production apparatuses described in the '949 publication and the '008 publication are similar to a production apparatus employing a roll out process of a rolling method.

In the production apparatuses of the '949 publication and the '008 publication using the pressure rollers, the rollers disposed above and below the glass ribbon are made to basically oppose linearly to the glass ribbon for rolling out the glass ribbon, and hence, an area for forming the glass ribbon into a thin plate is as small as a linear area, steam generated in this area is instantaneously dispersed, and it is difficult to stably hold a steam film in this area, resulting in a problem that irregularities of the faces of the rollers are transcribed onto the glass ribbon.

On the other hand, JP-A-2004-26534 (hereinafter referred to as the '534 publication) discloses a flat glass production apparatus including a pair of tension rollers and a glass ribbon forming device.

In the production apparatus of the '534 publication, a glass ribbon falling from a lip face of a glass melting furnace outlet is stretched and hung in the shape of an S between the pair of tension rollers for applying tension to the glass ribbon, and the glass ribbon with a formable temperature having passed through the pair of tension rollers is formed into a glass ribbon with a desired thickness by the glass ribbon forming device.

The tension rollers described in the '534 publication have substantially the same structure as the rollers disclosed in the '949 publication, and the glass ribbon is stretched and hung in the shape of an S between these tension rollers via a thin layer of a steam film. Furthermore, since the speed of the tension rollers is set to be higher than the speed of the glass ribbon running down, a fire polishing function is caused on the interface between the tension rollers and the glass ribbon, so as to fire polish the both faces of the glass ribbon passing between the tension rollers. In this manner, it is advantageously possible to eliminate a trace of transcription of the surface characteristics of the lip face or a trace of pulsation caused at the edge of the lip face having been formed on the face of the glass ribbon.

In other words, the tension rollers of the '534 publication are provided not for the purpose of forming the molten glass into a glass ribbon with an estimated ultimate thickness by themselves but for the purpose of fire polishing the face of the glass ribbon. The glass ribbon is formed into the ultimate thickness by the glass ribbon forming device disposed at a stage subsequent to the tension rollers. Therefore, the molten glass supplied to the tension rollers is adjusted to have a temperature higher than, for example, the molten glass of the '949 publication or the '008 publication so as not to be cooled down to an unformable temperature in passing through the tension rollers.

At this point, the tension rollers mean rollers disposed differently from the pressure rollers and disposed so that a glass ribbon may be stretched and hung on the rollers for applying tension to the glass ribbon in its moving direction. Since the rollers are thus disposed, the glass ribbon is stretched and hung around the circumferential faces of the tension rollers by a prescribed length, and hence, the glass ribbon opposes the rollers in a large opposing face so as to be effectively fire polished.

Furthermore, the glass ribbon forming device disclosed in the '534 publication includes a large number of supports formed to be capable of containing water therein, a supply device for supplying water to the supports, a belt conveyor for making the supports go around, and carriage driving rollers for carrying the formed glass ribbon.

The glass ribbon supplied from the tension rollers onto the supports is formed into a glass ribbon with an estimated ultimate thickness while moving together with the supports via a thin layer of a steam film formed between the supports and the glass ribbon. Furthermore, since the tension to pull the glass ribbon placed on the supports in the carrying direction is caused by friction resistance between the plural carriage driving rollers and the glass ribbon, when the number of revolutions of the carriage driving rollers is variable, the thickness of the glass ribbon to be formed may be controlled.

When the glass ribbon passing through the glass ribbon forming device is pulled in the carrying direction, the width of the glass ribbon is reduced due to the tension, and hence, there arises a problem that the width of the glass ribbon to be formed is smaller than a desired width and also the thickness is larger than a desired thickness.

JP-A-2002-47020 (hereinafter referred to as the '020 publication) discloses a forming device that overcomes the problem of the glass ribbon forming device of the '534 publication. The forming device of the '020 publication is a device for forming molten glass into a glass ribbon while keeping portions of a glass ribbon in the vicinity of its both ends along the widthwise direction in a shape to be difficult to shrink in the widthwise direction. Specifically, concave grooves are formed on both sides of a support and both end portions along the widthwise direction of a glass ribbon are allowed to bend into the concave grooves by its own weight, and thus, a flat portion of the glass ribbon is prevented from shrinking in the widthwise direction. This forming device has an advantage that a glass ribbon may be formed into a desired width and a desired thickness.

A flat glass production apparatus disclosed in the '020 publication, however, has a problem of increase in size of equipment because it needs the forming device of a large scale including a large number of supports, the supply device, the belt conveyor and a plurality of carriage driving rollers.

EP 1 516 858 A1 discloses a method of supplying a glass ribbon in a molten state to be supplied from a glass melting furnace to a flat glass forming apparatus. The glass ribbon supplied from a glass melting furnace to a flat glass forming apparatus is stretched between one pair of tension rollers.

US 1 818 153 A discloses a process and apparatus wherein molten glass is flowed downwardly from a molten bath and passed between sheet forming means and gradually reduced through successive stages to a sheet of substantially predetermined dimensions.

### DISCLOSURE OF THE INVENTION

### PROBLEMS TO BE SOLVED BY THE INVENTION

As described above, since the production apparatuses of the '949 publication and the '008 publication using the pressure rollers are the apparatuses for forming molten glass into a glass ribbon with an ultimate thickness by using the pressure rollers, there is no need to provide the forming device disclosed in the '534 publication or the '020 publication, and therefore, they have an advantage that the equipment is compact. However, the area for forming the glass ribbon into a thin plate is as small as a linear area, and hence it is difficult to stably keep the steam film in this area, which leads to the problem that the irregularities of the rollers are transcribed onto the glass ribbon.

On the other hand, the production apparatuses of the '534 publication and the '020 publication have the advantage that molten glass may be formed into a glass ribbon with a prescribed thickness, and furthermore, the production apparatus of the '020 publication has the advantage that a glass ribbon with a desired width and a desired thickness may be formed. However, these production apparatuses have the problem that the equipment is increased in its size because they need the large scale forming device.

The present invention was made in consideration of these circumstances, and an object of the invention is providing a flat glass production apparatus and a process for producing a flat glass in which molten glass may be formed into a glass ribbon with a desired width and a desired thickness and with a good surface quality as well as equipment may be made compact.

### MEANS FOR SOLVING THE PROBLEMS

The present invention provides a flat glass production apparatus, including: a molten glass ribbon supply part supplying a continuous flow of molten glass to a forming part as a glass ribbon of a formable temperature; the forming part including a plurality of tension rollers for forming the glass ribbon of the formable temperature supplied from the molten glass ribbon supply part into a glass ribbon of an unformable temperature; and a carriage part carrying out the glass ribbon of the unformable temperature on a downstream side of the forming part, wherein: the plurality of tension rollers including: each of tension rollers is disposed to have shaft center thereof extending in a horizontal direction and perpendicularly to a moving direction of the glass ribbon; among the plurality of tension rollers, odd-numbered tension rollers from an upstream side along the moving direction of the glass ribbon are disposed on a lower face side of the glass ribbon and even-numbered tension rollers are disposed on an upper face side of the glass ribbon; with regard to an odd-numbered tension roller and an even-numbered tension roller adjacent on the downstream side out of the plural tension rollers, an uppermost position of a circumferential face of the odd-numbered tension roller is disposed at the same level as or at a higher level than a lowermost position of a circumferential face of the even-numbered tension roller, and a distance between the circumferential faces of the odd-numbered and even-numbered tension rollers adjacent to each other is larger than a thickness of the glass ribbon present therebetween; at least a tension roller disposed in a most upstream position among the odd-numbered tension rollers out of the plurality of tension rollers, at least a tension roller disposed in a most upstream position among the even-numbered tension rollers or at least two tension rollers disposed in a most upstream position among the odd-numbered and even-numbered tension rollers have, in both end portions thereof and along a circumferential direction, concave grooves for forming substantially convex portions in both end portions of the glass ribbon; and all the plurality of tension rollers or all the plurality of tension rollers excluding a first tension roller are steam generating tension rollers made of a roll base capable of containing a steam film forming agent therein and having a structure in which steam generated from the steam film forming agent contained in the roll base is supplied between a circumferential face of the tension roller and a face of the glass ribbon.

According to the flat glass production apparatus of this invention, when the molten glass is supplied from the molten glass ribbon supply part to the even-numbered and odd-numbered tension rollers disposed in the most upstream position out of the tension rollers of the forming part, the substantially convex portions are formed in both end portions along the widthwise direction of the glass ribbon due to its own weight or due to tension applied to the glass ribbon by the concave grooves formed in the both end portions of one or both of the tension rollers. Therefore, the glass ribbon is prevented from shrinking in the widthwise direction. Then, the glass ribbon is cooled to the unformable temperature while passing through the plural tension rollers disposed on the downstream side and is formed into the glass ribbon with a desired width and a desired thickness. Thereafter, the glass ribbon is directly carried out by the carriage part after passing through the forming part. Incidentally, the substantially convex portions of the both end portions of the glass ribbon may be disposed in positions slightly closer to the center of the glass ribbon from the edges thereof or may be disposed at the edges of the glass ribbon.

Specifically, when the tension rollers are used in accordance with the present invention, the disadvantages of the '949 publication and the '008 publication using the pressure rollers may be overcome, and in addition, owing to the concave grooves formed in the tension roller of the forming part, the molten glass may be formed into a glass ribbon with a desired width and a desired thickness. Furthermore, there is no need to use the forming device as described in the '534 publication and the '020 publication, and the glass ribbon having passed through the forming part is carried out by the carriage part with a simple structure, and therefore, equipment of the production apparatus may be compact.

Moreover, in each tension roller according to the present invention, a steam film forming agent, which is not gaseous in the vicinity of ordinary temperature and is gaseous at a glass transition temperature of the glass, is introduced in a liquid state into the roll base capable of containing the steam film forming agent, and tension is applied to the glass ribbon via a thin layer of a steam film formed through vaporization of the steam film forming agent with high heat of the glass ribbon. Therefore, since a heat insulating barrier is formed by the thin layer of the steam film between the glass ribbon and the tension roller, the molten glass may be prevented from being abruptly cooled as well as the face of the roll base is not brought into direct contact with the glass ribbon, and therefore, traces of contact with the face of the roll base or substantial irregularities of the face of the roll base are not transcribed to the face of the formed glass ribbon, resulting in forming a glass ribbon with a high quality.

Incidentally, a roller conveyor with a simple structure may be exemplified as the carriage part. Alternatively, when the glass ribbon is carried out in the substantially vertical direction, rollers in contact with the front and back faces of the glass ribbon may be exemplified.

Furthermore, one of the odd-numbered and even-numbered tension rollers having the concave grooves and disposed in the most upstream position corresponds to the odd-numbered tension roller when the substantially convex portions are formed in the both end portions of the glass ribbon by its own weight, or corresponds to the even-numbered tension roller when the substantially convex portions are formed by applying the tension (tensile force) to the glass ribbon. In general, the glass ribbon passes through the forming part with tension applied thereto by friction resistance between the carriage part and the glass ribbon, and when this tension is increased beyond a force for forming the substantially convex portions by its own weight, the substantially convex portions may be formed in the both end portions of the glass ribbon by the concave grooves of the tension roller disposed above.

In the flat glass production apparatus to this invention, the first tension roller may be a steam generating tension roller having the concave grooves.

In the flat glass production apparatus of this invention, the first tension roller may be a cooling roller cooled by a coolant introduced into a roll body thereof, and at least the tension roller disposed in the most upstream position out of the even-numbered tension rollers may have the concave grooves.

According to the present invention, merely the tension roller disposed in the most upstream odd-numbered position is the so-called cooling roller, whose roll body is cooled by a coolant introduced thereinto, and therefore, the glass ribbon is directly cooled when it is brought into sliding contact with the face of the roll body of the cooling roller. When the glass ribbon is thus directly cooled merely by the cooling roller disposed on the upstream side and on the lower face side, cooling power approximately three times as high as that attained by a tension roller that cools molten glass via the thin layer of the steam film may be attained. Therefore, while suppressing transcription of irregularities of the roller disposed on the lower face side of the glass ribbon by the tension rollers having the steam film and disposed on the downstream side, the number of tension rollers may be reduced, so that the apparatus may be made more compact.

Furthermore, in the flat glass production apparatus of this invention, when the first tension roller has the concave grooves, each of subsequent odd-numbered tension rollers has, or when the second tension roller has the concave grooves, each of subsequent even-numbered rollers has, end portions with a smaller diameter than a diameter of a center portion thereof.

In the flat glass production apparatus of this invention, an odd-numbered tension roller may have a shaft center disposed in a position lower than a position of a shaft center of an adjacent even-numbered tension roller.

In the flat glass production apparatus of this invention, each of the steam generating tension rollers may have, on a circumferential face thereof, a groove for allowing steam to escape.

The present invention provides a process for producing a flat glass by making a glass ribbon of a formable temperature pass between a plurality of tension rollers, each of which is disposed to have shaft center extending in a horizontal direction and perpendicularly to a moving direction of the glass ribbon, to be formed into a glass ribbon of an unformable temperature, wherein: the glass ribbon of the formable temperature is allowed to pass between the plurality of tension rollers, which are disposed alternately above and below the glass ribbon with a distance between circumferential faces of adjacent tension rollers set to be larger than a thickness of the glass ribbon present therebetween; substantially convex portions are formed in both end portions along a widthwise direction of the glass ribbon by a tension roller having concave grooves formed in both end portions thereof along a circumferential direction; and a steam generating tension roller is used as at least one of the plurality of tension rollers, and the glass ribbon is supported on the tension roller with steam disposed between the glass ribbon and a circumferential face of the steam generating tension roller.

In the process for producing a flat glass of this invention, the glass ribbon of the formable temperature may be first supported by a steam generating tension roller having the concave grooves and provided below the glass ribbon and may be next supported by a steam generating tension roller provided above the glass ribbon.

In the process for producing a flat glass of this invention, the glass ribbon of the formable temperature may be first supported and cooled by a cooling roller provided below the glass ribbon and may be next supported by a steam generating tension roller having the concave grooves and provided above the glass ribbon.

In the process for producing a flat glass of this invention, the glass ribbon of the formable temperature may be first supported by a steam generating tension roller having the concave grooves and provided below the glass ribbon and may be next supported by a steam generating tension roller having the concave grooves and provided above the glass ribbon.

In the process for producing a flat glass of this invention, the glass ribbon may have, in a position immediately before coming into contact with a first tension roller, a formable temperature corresponding to a viscosity of approximately 10^{2.0 to 3.9} Pa·s, and have, in a position immediately after coming into contact with a final tension roller, an unformable temperature corresponding to a viscosity of approximately 10^{6.4} Pa·s.

In the process for producing a flat glass of this invention, the steam generating tension roller may be rotated in a reverse direction to a moving direction of the glass ribbon, or when the steam generating tension roller is rotated in a forward direction, the steam generating tension roller may be rotated at a circumferential speed 1.1 times or more as high as a moving speed of the glass ribbon.

In the process for producing a flat glass of this invention, the glass ribbon of the unformable temperature may be annealed and cut thereafter.

### EFFECTS OF THE INVENTION

As described above, according to the flat glass production apparatus and the process for producing a flat glass of this invention, molten glass may be formed into a glass ribbon with a desired width and a desired thickness and the equipment may be made compact.

Furthermore, according to the flat glass production apparatus and the process for producing a flat glass of this invention, a flat glass with a high quality may be produced.

### BRIEF DESCRIPTION OF THE DRAWINGS

FIG. 1 is a side view of a flat glass production apparatus used as a reference for describing a flat glass production apparatus of Embodiment 1.
FIG. 2 is a principal part enlarged perspective view of the flat glass production apparatus of FIG. 1.
FIG. 3 is a side view of a flat glass production apparatus used as a reference for describing a flat glass production apparatus of Embodiment 2.
FIG. 4 is a principal part enlarged perspective view of the flat glass production apparatus of FIG. 3.
FIG. 5 is a principal part enlarged side view illustrating the structure of a forming device included in the flat glass production apparatus of Embodiment 1.
FIG. 6 is a cross-sectional view taken along the shaft direction of a tension roller.
FIG. 7 is a principal part enlarged side view illustrating the structure of a forming device included in the flat glass production apparatus of Embodiment 2.
FIG. 8 is a principal part enlarged side view illustrating the structure of a forming device included in a flat glass production apparatus according to Embodiment 3.
FIG. 9 is a perspective view of a tension roller on which a steam escape groove is spirally formed.
FIG. 10 is a perspective view of a tension roller on which steam escape grooves are formed along the shaft direction.

### MODE FOR CARRYING OUT THE INVENTION

Now, preferred embodiments of a flat glass production apparatus and a process for producing a flat glass according to this invention will be described with reference to the accompanying drawings.

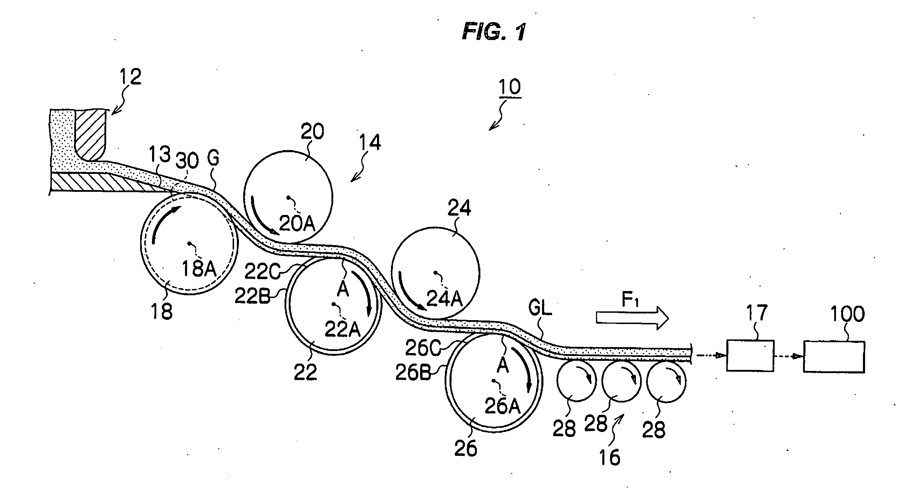

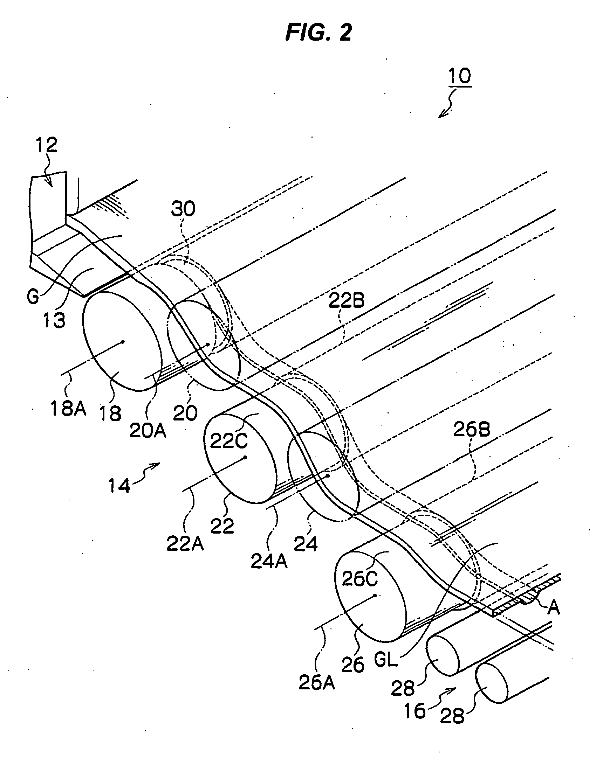

FIG. 1 is a side view of a flat glass production apparatus 10 used as a reference for describing a flat glass production apparatus according to Embodiment 1, and FIG. 2 is a principal part enlarged view of the flat glass production apparatus 10 of FIG. 1.

In this production apparatus 10, a glass melting furnace (molten glass supply part) 12, a forming device (forming part) 14 and a roller carriage device (carriage part) 16 are successively arranged along a direction from an upstream side to a downstream side of molten glass G. Furthermore, an annealing furnace 17 for annealing a formed glass ribbon is provided on the downstream side of the roller carriage part 16, and a cutting unit 100 for cutting the annealed glass ribbon is disposed on the downstream side of the annealing furnace. While passing through the annealing furnace 17, the glass ribbon is cooled down to substantially room temperature, and thereafter, the glass ribbon is cut into a prescribed size to be produced into a flat glass. In other words, a flat glass production apparatus of this embodiment is obtained by involving the annealing furnace 17 and the cutting unit 100 in the flat glass production apparatus 10. It is noted that the annealing furnace 17 and the cutting unit 100 may be any of known devices and their forms are not particularly specified.

The glass melting furnace 12 is a tank in which a prescribed glass material for a flat glass is molten, molten glass G having a viscosity and a temperature falling in suitable ranges for formation is prepared by controlling the melting temperature and the thus prepared molten glass G is stored. Since there is a correlation between the viscosity of the molten glass G and the temperature thereof, the viscosity of the molten glass G stored in the glass melting furnace 12 is controlled by adjusting the temperature of the molten glass G by using heating equipment. Furthermore, the glass is molten in the glass melting furnace 12 at a temperature in accordance with the glass composition, and in case of soda-lime glass, for example, at approximately 1450 to 1550°C (corresponding to a viscosity of 10^{0.7 to 1.0} Pa·s) for a sufficiently long period of time so as to get rid of a foam defect of the glass, fluctuation in the composition and other defects.

The molten glass G having been adjusted in the temperature and the viscosity by the glass melting furnace 12 is supplied in the form of a continuous molten glass flow from a lip face 13 disposed at an outlet of the glass melting furnace 12 to the forming device 14 as a glass ribbon of a formable temperature and is formed into a glass ribbon GL by the forming device 14.

Incidentally, assuming that soda-lime glass is used as the glass, for example, the temperature of the molten glass G supplied to the forming device 14 is preferably approximately 930 to 1200°C corresponding to a viscosity of 10^{2.0} to ^{3.9} Pa·s. When the temperature of the molten glass G falls in this range, the glass is sufficiently soft for starting the formation and hence the glass temperature is not too high. For controlling devitrification of glass, the molten glass G adjusted in temperature to approximately 1000 to 1100°C (corresponding to a viscosity of 10^{2.6 to 3.3} Pa·s) is preferably supplied to the forming device 14. Although the glass melting furnace 12 employs a lip shape in its supplying part, it may employ a slit shape of the down draw process or a tub shape of the fusion process. In other words, the molten glass supply part of this invention is not particularly specified in its form as far as it may supply ribbon-shaped molten glass to the forming device 14.

The forming device 14 includes a plurality of tension rollers 18, 20, 22, 24 and 26, and the glass ribbon GL fallen from the lip face 13 of the glass melting furnace 12 is stretched and hung successively on these tension rollers 18 to 26.

At this point, each of the tension rollers 18, 20, 22, 24 and 26 is disposed to have their shaft center extending in the horizontal direction and perpendicularly to the moving direction of the glass ribbon GL. Furthermore, among the plural tension rollers, the odd-numbered tension rollers 18, 22 and 26 from the upstream side of the moving direction of the glass ribbon GL are disposed on the lower face side of the glass ribbon GL, and the even-numbered tension rollers 20 and 24 are disposed on the upper face side of the glass ribbon. Moreover, with regard to an odd-numbered tension roller and an even-numbered tension roller 18 and 20 or 22 and 24 disposed adjacently on the downstream side, the odd-numbered tension roller 18 or 22 is disposed to have the uppermost position of a circumferential face at the same level as or lower than the lowermost position of a circumferential face of the even-numbered tension roller 20 or 24, and the minimum distance between the circumferential faces of the odd-numbered tension roller and the even-numbered tension roller 18 and 20 or 22 and 24 adjacent to each other is larger than the thickness of the glass ribbon GL present between the circumferential faces. It is noted that the position of the shaft center of the odd-numbered tension roller 18 or 22 is preferably lower than the position of the shaft center of the adjacent even-numbered tension roller 20 or 24.

Furthermore, these tension rollers 18 to 26 are rotated in directions shown with arrows in FIG. 1 by a rotation drive not shown. Thus, the molten glass G is cooled and formed into the glass ribbon GL under application of tension from the tension rollers 18 to 26. Moreover, although the tension roller 26 disposed in the most downstream position in the forming device 14 does not have an upper tension roller to be paired with, such an upper tension roller may be additionally provided. In this case, three pairs of upper and lower tension rollers are arranged in the forming device 14. In addition, the length of a passage of the glass ribbon GL formed by these tension rollers 18 to 26 is set so that the temperature of the glass ribbon GL attained immediately after passing through the tension roller 26 may be an unformable temperature corresponding to a viscosity of approximately 10^{6.4} Pa·s. In other words, the glass ribbon is controlled to have a temperature corresponding to a viscosity of 10^{2.0 to 6.4} Pa·s (that is, 750 to 1200°C with respect to the soda-lime glass) in the forming device 14. When the temperature falls in this range, there arises no problem in the formability, the formation time is not elongated because the temperature of the glass ribbon is not too high, and there is no need to provide a large number of tension rollers. More preferably, the glass ribbon is controlled to have a temperature corresponding to a viscosity of 10^{2.9 to 6.4} Pa·s (that is, 750 to 1050°C with respect to the soda-lime glass). Still more preferably, the glass ribbon is controlled to have a temperature corresponding to a viscosity of 10^{2.9 to 5.5} Pa·s (that is, 800 to 1050°C with respect to the soda-lime glass).

Taking the soda-lime glass as an example, a temperature corresponding to a viscosity of approximately 10^{6.2} Pa·s is approximately 760°C, and in the forming device 14 of this embodiment, the length of the passage is set so that the temperature of the glass ribbon GL attained immediately after passing through the tension roller 26 may be approximately 750°C.

Accordingly, when the forming device 14 of this embodiment is employed, the glass ribbon GL of a temperature of approximately 930 to 1200°C supplied to the first and second tension rollers 18 and 20 is cooled and formed into the glass ribbon GL while passing through the forming device 14 and is formed into the glass ribbon GL with an ultimate thickness of an unformable temperature of approximately 750°C immediately after passing through the fifth tension roller 26. Incidentally, the length of the passage of the glass ribbon GL is appropriately set on the basis of the temperature of the glass ribbon GL, the length of a part of the glass ribbon GL stretched and hung on the tension rollers 18 to 26 (i.e., the length of a part of the glass ribbon opposing the tension rollers) and the number of the tension rollers. In other words, the number of the tension rollers is not limited to five as that illustrated in FIGS. 1 and 2. If the glass ribbon may be formed into a desired thickness by the first and second tension rollers alone and may be cooled to an unformable temperature in a downstream portion of the forming device 14, merely a pair of tension rollers may be provided.

The glass ribbon GL having been formed by the forming device 14 is carried out of the production apparatus 10 with its lower face in contact with a plurality of rollers 28 of the roller carriage device 16 disposed at a stage subsequent to the forming device 14. Since the glass ribbon GL having passed through the forming device 14 has been cooled to an unformable temperature, it may be carried in contact with the plural rollers 28 without transcribing irregularities of the surfaces of the rollers. It is noted that the rollers 28 are driven in directions of arrows by a rotation drive not shown. Furthermore, although the glass ribbon having been formed is taken out in a horizontal direction in FIG. 1, a case where the glass ribbon having been formed is taken out in substantially a vertical direction is included in the scope of the invention. In this case, the glass ribbon may be carried out with rollers in contact with front and back faces of the glass ribbon.

The tension rollers 18 to 26 of the forming device 14 are arranged above and below the passage of the glass ribbon so as to sandwich the passage so that each of their shaft centers 18A, 20A, 22A, 24A and 26A is disposed in substantially vertically to the moving direction of the glass ribbon GL and in the horizontal direction, so that the glass ribbon GL may pass in a zigzag manner in a side view.

Furthermore, as illustrated in FIG. 2, concave grooves 30 for forming substantially convex portions A in both end portions of the glass ribbon GL supplied from the glass melting furnace 12 by its own weight are formed along a circumferential direction in both end portions (merely one of which is illustrated in FIG. 2) of the first tension roller 18 disposed in the most upstream position out of the odd-numbered tension rollers 18, 22 and 26. The depth of each concave groove 30 is preferably 1 to 10 mm, more preferably 2 to 7 mm and further preferably 3 to 4 mm. The width of the concave groove 30 is preferably 10 to 100 mm, more preferably 20 to 80 mm and further preferably 30 to 60 mm. Incidentally, the substantially convex portion A formed in each end portion of the glass ribbon may be disposed in a position slightly closer to the center of the glass ribbon from the edge of the glass ribbon as illustrated in FIG. 2 or may be disposed at the edge of the glass ribbon. When the substantially convex portion is not disposed at the edge of the glass ribbon, the substantially convex portion is disposed in a position closer to the center of the glass ribbon from the edge preferably by 100 mm or less. Furthermore, each of the odd-numbered tension rollers 22 and 26 following the tension roller 18 may be provided with similar concave grooves formed in a circumferential direction in both end portions thereof.

All of the tension rollers 18, 20, 22, 24 and 26 of Embodiment 1 are steam generating tension rollers that are made of a roll base capable of containing a steam film forming agent as described later and have a structure for supplying steam, generated from the steam film forming agent contained in the roll base, between the circumferential faces of the tension rollers and the face of the glass ribbon.

Next, the function of the flat glass production apparatus 10 having the aforementioned structure will be described.

When the molten glass G is supplied from the lip face 13 disposed at the outlet of the glass melting furnace 12 to the first and second tension rollers 18 and 20 disposed in the most upstream position in the forming device 14, the end portions along the widthwise direction of the glass ribbon GL run down by its own weight into the concave grooves 30 formed in the both end portions of the first tension roller 18, resulting in forming the substantially convex portions. FIG. 2 illustrates the cross-section of the substantially convex portion A of the glass ribbon GL formed by the concave groove 30. Needless to say, the substantially convex portions A are formed on the lower face of the glass ribbon GL continuously along the moving direction of the glass ribbon GL. Thus, the glass ribbon GL is provided, in its both end portions, with the substantially convex portions A engaged in the concave grooves 30, and hence, the shrinkage along the widthwise direction is prevented. This glass ribbon GL is cooled to the unformable temperature while passing through the tension rollers 22, 24 and 26 disposed on the downstream side as described above, resulting in being formed into the glass ribbon GL with a desired width and a desired thickness. Then, since the glass ribbon GL has been cooled to the unformable temperature (of approximately 750°C) after passing through the forming device 14, it is directly carried out with its lower face in contact with the plural rollers 28 of the roller carriage device 16. In FIG. 1, F₁ denotes tension of the glass ribbon GL, and the tension F₁ is caused by the friction resistance between the plural rollers 28 of the roller carriage device 16 and the glass ribbon GL or by a pulling device (not shown) disposed at a stage subsequent to the roller carriage device 16.

According to the production apparatus 10 for a glass ribbon having the aforementioned structure, since the tension rollers 18 to 26 are used, the disadvantages of the '949 publication and the '008 publication using the pressure rollers may be overcome. Furthermore, since the substantially convex portions are formed in the both end portions of the glass ribbon GL by the concave grooves 30 formed in the first tension roller 18 of the forming device 14, the molten glass G may be formed into the glass ribbon GL with a desired width and a desired thickness. Moreover, since the glass ribbon GL having passed through the forming device 14 is carried in a contact state by the roller carriage device 16 with a simple structure, there is no need to use the forming device as disclosed in the '534 publication or the '020 publication, and hence, an effect of compactness of equipment of the production apparatus may be attained.

Incidentally, in the forming device 14, in the case where the concave grooves 30 are formed in the first tension roller alone of the passage of the glass ribbon GL as illustrated in FIGS. 1 and 2, small-diameter portions 22C and 26C are preferably formed in both end portions of the odd-numbered tension rollers 22 and 26 following the first tension roller so as to let the substantially convex portions A of the glass ribbon GL go out of roll bodies 22B and 26B of the tension rollers 22 and 26. These small-diameter portions 22C and 26C have a smaller diameter than the roll bodies 22B and 26B disposed at the centers of the rollers, and a level difference from the roll bodies 22B and 26B is set to be equal to the height of the substantially convex portion A. In this manner, the face of the glass ribbon GL excluding the both end portions where the substantially convex portions A are formed, namely, the face thereof to be formed into a product, is stably carried by the roll bodies 22B and 26B. Furthermore, the both end portions of the glass ribbon GL having the substantially convex portions A formed are cut at a stage following the production apparatus 10, so as to be recycled.

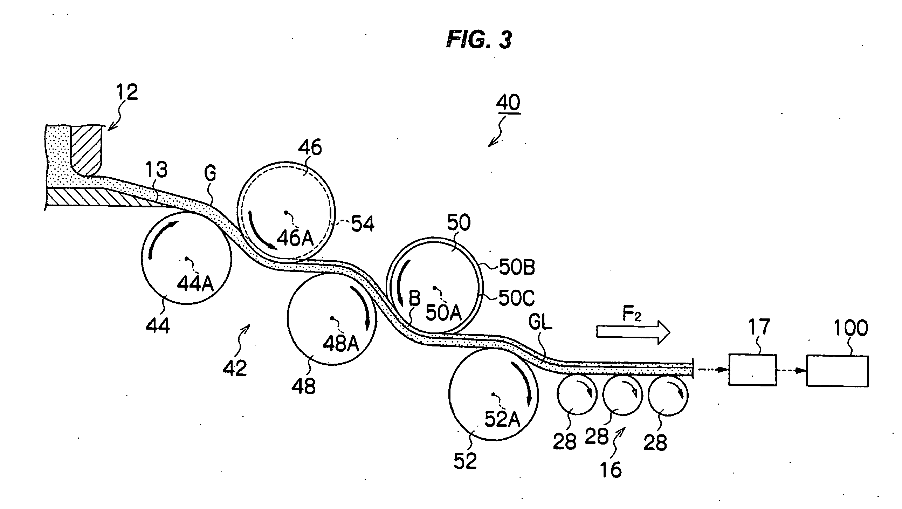

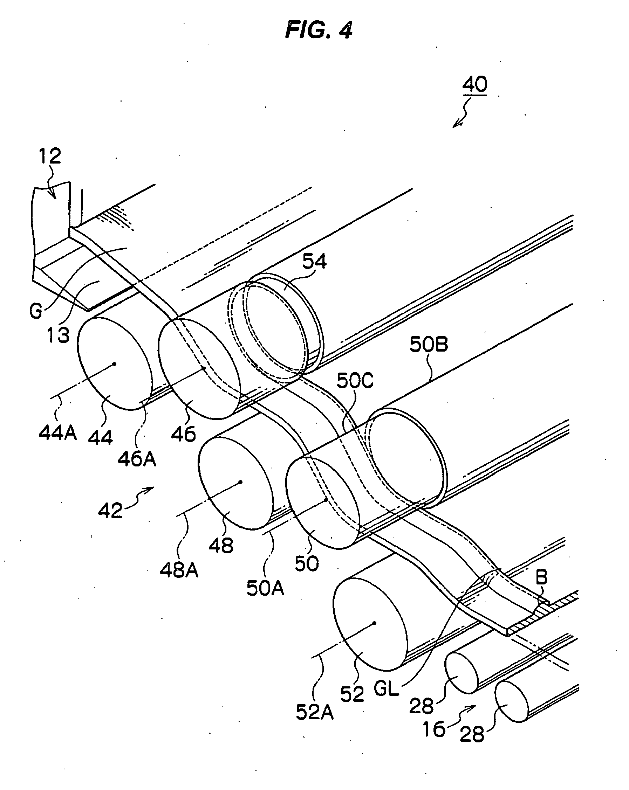

FIG. 3 is a side view of a flat glass production apparatus 40 used as a reference for describing a flat glass production apparatus according to Embodiment 2, and FIG. 4 is a principal part enlarged view of the flat glass production apparatus 40 of FIG. 3. It is noted that like reference numerals are used to refer to like or similar elements used in the flat glass production apparatus 10 of FIGS. 1 and 2 so as to omit the description.

This production apparatus 40 includes a glass melting furnace 12, a forming device 42, a roller carriage device 16, an annealing furnace 17 and a cutting unit 100.

Similarly to the forming device 14 of FIG. 1, the forming device 42 includes a plurality of tension rollers 44, 46, 48, 50 and 52, so that a glass ribbon GL falling from a lip face 13 of the glass melting furnace 12 may be stretched and hung successively on the tension rollers 44 to 52.

At this point, each of the tension rollers 44, 46, 48, 50 and 52 is disposed with their shaft center extending in the horizontal direction and perpendicularly to the moving direction of the glass ribbon GL. Furthermore, among the plural tension rollers, the odd-numbered tension rollers 44, 48 and 52 from the upstream side of the moving direction of the glass ribbon GL are disposed on the lower face side of the glass ribbon GL, and the even-numbered tension rollers 46 and 50 are disposed on the upper face side of the glass ribbon. Moreover, with regard to an odd-numbered tension roller and an even-numbered tension roller 44 and 46 or 48 and 50 disposed adjacently on the downstream side, the odd-numbered tension roller 44 or 48 is disposed to have the uppermost position of a circumferential face at the same level as or lower than the lowermost position of a circumferential face of the even-numbered tension roller 46 or 50, and the minimum distance between the circumferential faces of the odd-numbered tension roller and the even-numbered tension roller 44 and 46 or 48 and 50 adjacent to each other is larger than the thickness of the glass ribbon GL present between the circumferential faces. It is noted that the position of the shaft center of the odd-numbered tension roller 44 or 48 is preferably lower than the position of the shaft center of the adjacent even-numbered tension roller 46 or 50.

Incidentally, although the tension roller 52 disposed in the most downstream position in the forming device 42 does not have an upper tension roller to be paired with, such an upper tension roller may be additionally provided. Furthermore, the length of a passage of the glass ribbon GL formed by these tension rollers 44 to 52 is also set so that the temperature of the glass ribbon GL attained immediately after passing through the tension roller 52 may be an unformable temperature corresponding to a viscosity of approximately 10^{6.4} Pa·s or a temperature of approximately 750°C. Moreover, the tension rollers 44 to 52 are arranged above and below the passage of the glass ribbon so as to sandwich the passage and so that each of their shaft centers 44A, 46A, 48A, 50A and 52A is disposed in substantially vertically to the moving direction of the glass ribbon GL and in the horizontal direction, so that the glass ribbon GL may pass in a zigzag manner in a side view.

On the other hand, as illustrated in FIG. 4, concave grooves 54 for forming substantially convex portions B in both end portions of the glass ribbon GL supplied from the glass melting furnace 12 by tension F₂ of the glass ribbon GL are formed along a circumferential direction in both end portions (merely one of which is illustrated in FIG. 4) of the second tension roller 46 disposed in the most upstream position out of the even-numbered tension rollers 46 and 50. It is noted that similar concave grooves may be formed in a circumferential direction in both end portions of the even-numbered tension roller 50 following the tension roller 46. Furthermore, the substantially convex portion B formed in each end portion of the glass ribbon GL may be disposed in a position slightly closer to the center of the glass ribbon from the edge of the glass ribbon as illustrated in FIG. 4 or may be disposed at the edge of the glass ribbon. When the substantially convex portion is not disposed at the edge of the glass ribbon, the substantially convex portion is disposed in a position closer to the center of the glass ribbon from the edge preferably by 100 mm or less.

In other words, in the flat glass production apparatus 40 of Embodiment 2, the tension F₂ of the glass ribbon GL is larger than the tension F₁ employed in the production apparatus 10 of FIG. 1, and the substantially convex portions are forcedly formed in both end portions of the glass ribbon GL by the concave grooves 54 of the second tension roller.

The tension rollers 46, 48, 50 and 52 of Embodiment 2 are steam generating tension rollers described later. On the other hand, the tension roller 44 may be a steam generating tension roller or may be a cooling roller described later.

Next, the function of the flat glass production apparatus 40 having the aforementioned structure will be described.

When the molten glass G is supplied from the lip face 13 disposed at the outlet of the glass melting furnace 12 to the tension rollers 44 and 46 disposed in the first and second positions in the forming device 42, the substantially convex portions are forcedly formed in the both end portions along the widthwise direction of the glass ribbon GL by the concave grooves 54 formed in the both end portions of the second tension roller 46 due to the tension F₂ of the glass ribbon GL. FIG. 4 illustrates the cross-section of the substantially convex portion B of the glass ribbon GL bent by the concave groove 54. The substantially convex portions B are formed on the upper face of the glass ribbon GL continuously along the passing direction of the glass ribbon GL. Thus, the glass ribbon GL is provided, in its both end portions, with the substantially convex portions B engaged in the concave grooves 54, and hence, the shrinkage along the widthwise direction is prevented. This glass ribbon GL is cooled to an unformable temperature while passing through the tension rollers 48 to 52 disposed on the downstream side as described above, resulting in being formed into the glass ribbon GL with a desired width and a desired thickness. Then, the glass ribbon GL having been cooled to the unformable temperature is carried out with its lower face in contact with plural rollers 28 of the roller carriage device 16.

Accordingly, the flat glass production apparatus 40 also exhibits the same effects as those attained by the flat glass production apparatus 10 of FIGS. 1 and 2.

Incidentally, in the forming device 42, in the case where the concave grooves 54 are formed in the second tension roller 46 alone as illustrated in FIGS. 3 and 4, small-diameter portions 50C are preferably formed in both end portions of the fourth tension roller 50, that is, the even-numbered tension roller following the second tension roller, so as to let the substantially convex portions B of the glass ribbon GL go out of a roll body 50B of the tension roller 50.

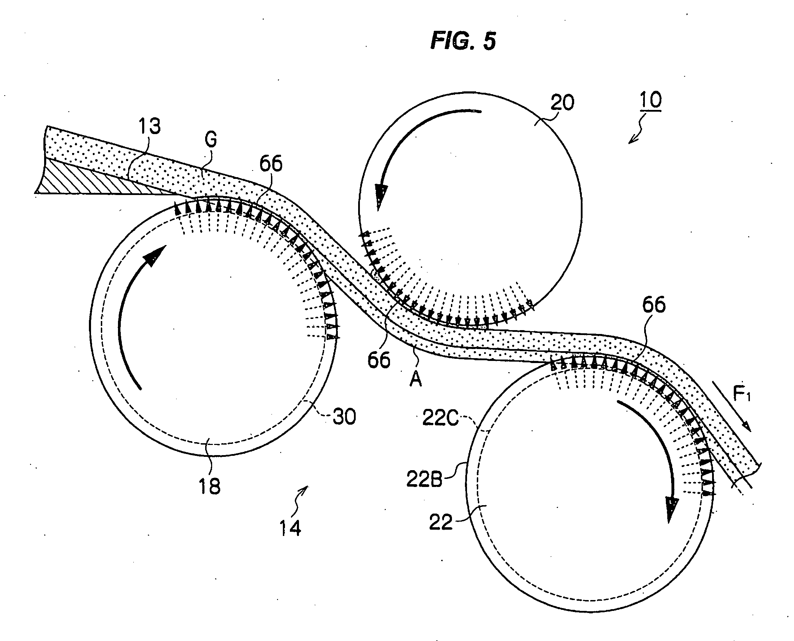

FIG. 5 is a principal part enlarged side view illustrating the structure of the forming device 14 (see FIGS. 1 and 2) of the glass ribbon production apparatus 10 according to Embodiment 1. FIG. 5 illustrates that the tension rollers 18 to 26 (among which the tension rollers 24 and 26 are not shown in the drawing) of the forming device 14 are all steam generating tension rollers.

Now, the structure of the steam generating tension roller will be described by exemplifying the tension roller 18.

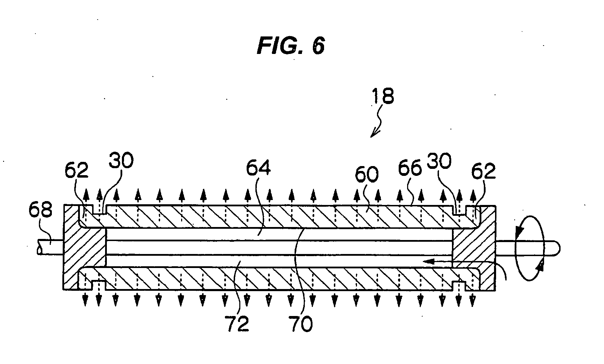

In the tension roller 18, as illustrated in a cross-sectional view of FIG. 6, the circumferential face of the roll body is made of a roll base 60 capable of containing a steam film forming agent therein as well as each end of the roller (including the concave groove 30) is made of a base 62 also capable of containing a steam film forming agent therein, and as illustrated with arrows, the steam film forming agent 64 having been introduced into the roll base 60 and the bases 62 is vaporized through the roller circumferential face due to high heat of the glass ribbon GL, that is, the molten glass. Therefore, the thin layer 66 of the steam film is stably formed between the glass ribbon GL and the tension roller 18 as illustrated in FIG. 5.

As a method for supplying the steam film forming agent to the tension roller 18, it may be supplied to a central cavity 72 formed between a rotating shaft 68 and an inner circumferential face 70 of the tension roller 18, so as to be permeated into the entire bases 60 and 62, or alternatively, a wet roll (not shown) may be provided in contact on a side of the tension roller 18 not facing the glass ribbon GL so as to allow the steam film forming agent having been supplied to the wet roll to transfer to the tension roller 18. Alternatively, a spray method in which the steam film forming agent is sprayed onto the face of the tension roller 18 by using a nozzle may be employed. What is important is that the steam film forming agent may be sufficiently contained in the bases 60 and 62 of the tension roller 18 by the method.

As the bases 60 and 62, any base made of a material or having a structure capable of a liquid therein, such as one made of, for example, a porous body or fibrous body, may be suitably used. In using a porous body, pores are preferably communicating pores. Furthermore, the porous body preferably has, on its surface, fine pores with a diameter of preferably 1 mm or less, more preferably 0.1 mm or less and further preferably 30 µm or less. Thus, the transcription of the pore shapes to the glass ribbon GL may be prevented. Moreover, the porous body is preferably made of a material with a high lyophilic property (for example, a hydrophilic property in case of water) against the steam film forming agent 64.

As a basic material for the bases 60 and 62, porous hydrophilic carbon is particularly suitably used, and apart from it, a polymer material derived from a natural product, such as cellulose, paper, wood or bamboo; a synthetic polymer-based material such as a thermoplastic resin, a thermosetting resin or a rubber; a carbon-based material or the like may be suitably used. Alternatively, a metal material such as iron, stainless steel or platinum, or a ceramic material including, as a principal component, a metal oxide, a metal carbide or a metal nitride such as aluminum oxide, zirconium oxide, silicon carbide or silicon nitride may be used. It is noted that a molded surface of the bases 60 and 62 may be very smooth excluding micro pores or fibrous irregularities, or may be provided with prescribed irregularities on the contrary.

As the steam film forming agent 64 to be used, any of various organic or inorganic substances that are liquid at ordinary temperature and gaseous at a glass transition temperature may be used. Furthermore, from the viewpoint of the operability in supplying it to the bases 60 and 62, one having a melting point of 40°C or less and a boiling point at atmospheric pressure of preferably 50 to 500°C and more preferably 300°C or less is preferably used. More preferably, steam resulting from the vaporization of the steam film forming agent 64 is not chemically too reactive to harmfully affect the glass, has low toxicity and is nonflammable at a temperature where it is used, and a typical example of such a substance is water.

As described above, as the steam film forming agent 64, it is necessary to appropriately select a liquid that is instantaneously vaporized by the high heat of the glass ribbon GL so as to form the stable thin layer 66 of the steam film. The thermal conductivity of the thin layer 66 of the steam film formed through the instantaneous vaporization with high heat is extremely low as compared with the thermal conductivity of a liquid or a solid, and hence, a heat insulating environment for the glass ribbon GL may be formed. When the thickness of the thin layer 66 of the steam film is too small, the tension roller 18 may be brought to direct contact with the glass ribbon GL, a heat insulating barrier is insufficiently formed, and it is easily affected by the irregularities of the surface of the tension roller 18, and therefore, the thickness needs to be at least 10 µm or more and preferably 50 µm or more. Furthermore, when the thin layer 66 of the steam film is too thick, the pressure of the tension roller 18 is difficult to transfer, and therefore, the thickness is preferably 500 µm less and suitably 200 µm or less.

Moreover, although various substances may be used as the steam film forming agent 64 as described above, water is generally suitably used from the viewpoint of the operability, availableness, safety and the like. Also, when the bases 60 and 62 are made of a porous body, for preventing the transcription of the porous pattern to the glass ribbon GL, the circumferential speed of the tension roller 18 is preferably set to be approximately 1.1 times or more as high as the carrying speed of the glass ribbon GL, and more preferably, the rotation direction of the tension roller 18 is opposite to the carrying direction of the glass ribbon GL. When the circumferential speed of the tension roller 18 is approximately 1.1 times or more as high as the carrying speed of the glass ribbon GL, the renewal frequency of the steam film on the face of the glass ribbon is increased, and hence, the surface quality of the glass ribbon is improved. When the tension roller 18 is rotated in the opposite direction, this effect is further enhanced. Furthermore, since the tension roller 18 and the glass ribbon GL are not in direct contact with each other owing to the thin layer 66 of the steam film, the tension F₁ causes no problem in carrying the glass ribbon GL.

When such a tension roller 18, that is, the steam generating tension roller, is used in the forming device 14, a heat insulating barrier is formed by the thin layer 66 of the steam film between the glass ribbon GL and the tension roller 18, and hence, the glass ribbon GL may be prevented from being rapidly cooled. Furthermore, since the circumferential faces of the bases 60 and 62 are not in direct contact with the glass ribbon GL, contact traces of the circumferential faces of the bases 60 and 62 or the irregularities of the circumferential faces of the bases 60 and 62 are never transcribed onto the face of the formed glass ribbon GL. Accordingly, when the tension roller 18 corresponding to the steam film generating tension roller is used, the glass ribbon GL with a high quality may be formed, and as a result, a flat glass obtained after passing through the annealing furnace 17 attains a high quality.

Incidentally, when all the tension rollers 20 to 26 disposed in the downstream side are steam generating tension rollers, the thin layer 66 of the steam film is formed between the upper and lower faces of the glass ribbon GL and the tension rollers 20 to 26, and therefore, the circumferential faces of the bases 60 and 62 of the tension rollers 20 to 26 are not in direct contact with the glass ribbon GL. Accordingly, contact traces of the circumferential faces of the bases 60 and 62 and the irregularities of the circumferential faces of the bases 60 and 62 are never transcribed onto the upper and lower faces of the formed glass ribbon GL, and hence, the glass ribbon GL with a high quality may be formed.

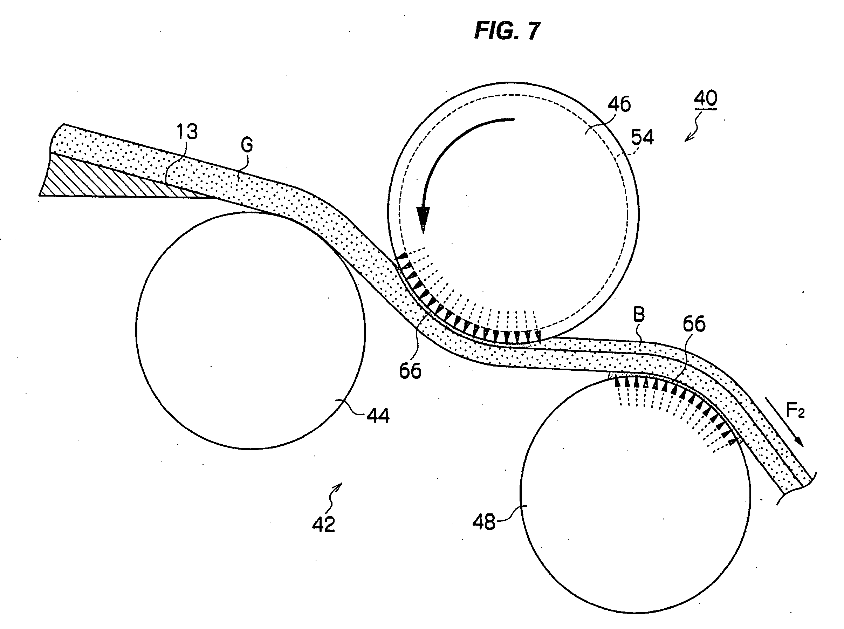

FIG. 7 is a principal part enlarged side view illustrating the structure of the forming device 42 of the flat glass production apparatus 40 (see FIGS. 3 and 4) of Embodiment 2. FIG. 7 illustrates that the tension rollers 46 to 52 (among which the tension rollers 50 and 52 are not shown) of the forming device 42 are steam generating tension rollers and that the first tension roller 44, that is, the odd-numbered tension roller disposed in the most upstream position, is a cooling roller.

In the tension roller 44 corresponding to the cooling roller, a coolant is introduced into its roll body in a cylindrical shape, so as to cool the roll body. Therefore, the glass ribbon GL with high heat stretched and hung on the tension roller 44 is directly cooled by bringing it into sliding contact with the circumferential face of the roll body of the tension roller 44.

When the glass ribbon GL with the high heat obtained immediately after running down from the glass melting furnace is directly cooled by merely the tension roller 44 corresponding to the cooling roller, cooling power three times as large as that of the tension roller 18 (see FIG. 5) that cools the glass ribbon GL via the thin layer 66 of the steam film may be attained, and thus, the length of the passage of the glass ribbon GL in the forming device 42 may be shortened. Incidentally, although it is apprehended that the quality of the face of the glass ribbon may be degraded due to irregularities derived from the cooling roller, since the tension rollers having the steam film are actually provided on the downstream side, the surface quality may be improved through the fire polishing effect attained by these tension rollers. Accordingly, as compared with the formation by using the conventional pressure rollers having no steam film, the surface quality degradation of the glass ribbon may be suppressed or prevented. Furthermore, since the tension roller 46 having the steam film is disposed above the glass ribbon, the substantially convex portions B are forcedly formed in the both end portions of the glass ribbon GL by the concave grooves 54 of the tension roller 46 owing to the tension F₂ of the glass ribbon GL.

It is noted that the tension roller 44 may be a steam generating tension roller. In this case, although a high cooling effect as that attained by the cooling roller may not be attained, the quality of the lower face of the glass ribbon GL may be as high as that attained in Embodiment 1.

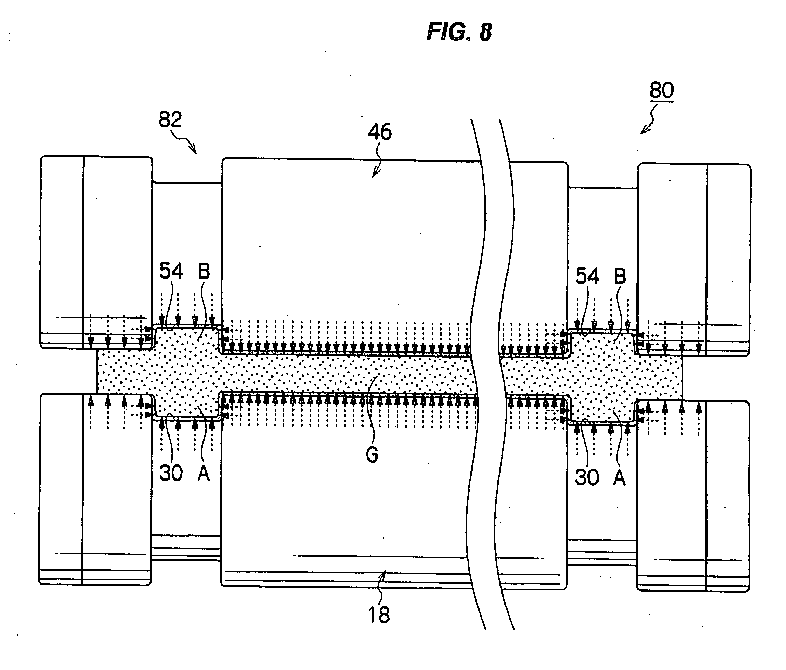

FIG. 8 is a principal part enlarged view illustrating the structure of a forming device 82 of a flat glass production apparatus 80 according to Embodiment 3. In this forming device 82, the tension roller 18 of FIG. 5 is used as an odd-numbered tension roller disposed in the most upstream position, and the tension roller 46 of FIG. 7 is used as an even-numbered tension roller disposed in the most upstream position.

Specifically, this forming device 82 uses, as the first and second tension rollers disposed in the most upstream position, the tension rollers 18 and 46 having the concave grooves 30 and 54 in their both end portions. When the tension of the glass ribbon GL passing through the forming device 82 is appropriately adjusted, the substantially convex portions A are formed by the concave grooves 30 on the lower face of the glass ribbon GL and the substantially convex portions B are formed by the concave grooves 54. Incidentally, the substantially convex portion formed in each end portion of the glass ribbon may be disposed in a position slightly closer to the center of the glass ribbon from the edge of the glass ribbon as illustrated in FIG. 8 or may be disposed at the edge of the glass ribbon. When the substantially convex portions A are formed on the lower face of the glass ribbon GL and the substantially convex portions B are formed on the upper face of the glass ribbon GL in this manner, the shrinkage along the widthwise direction of the glass ribbon GL is definitely restricted by the upper and lower concave grooves 30 and 54, and hence, the glass ribbon GL may be easily formed into a glass ribbon with a desired width and a desired thickness. It is noted that the tension rollers following the tension rollers 18 and 46 may be similarly provided with concave grooves.

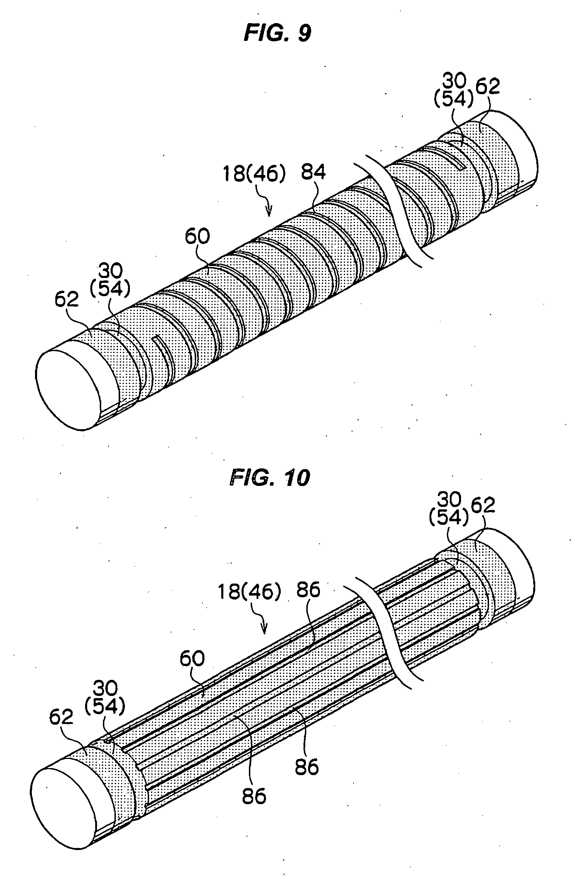

FIG. 9 is a perspective view of the tension roller 18 (46) in which one steam escape groove 84 is spirally formed on the circumferential face of the roll base 60, and FIG. 10 is a perspective view of the tension roller 18 (46) in which a plurality of steam escape grooves 86 are formed along the shaft direction on the face of the roll base 60.

When the steam generated continuously between the tension roller 18 (46) and the glass ribbon GL remains therebetween, it easily leads to a problem that the glass ribbon GL is deformed (swollen) by the pressure caused by the remaining steam. Therefore, when the steam escape grooves 84 or 86 are formed on the circumferential face of the roll base 60 as illustrated in FIG. 9 or 10, the steam generated between the tension roller 18 (46) and the glass ribbon GL is released along the steam escape grooves 84 or 86 from between the tension roller 18 (46) and the glass ribbon GL to the outside. In this manner, the steam may be prevented from remaining, and hence, the deformation of the glass ribbon GL may be prevented.

Incidentally, comparing the steam escape groove 84 of FIG. 9 with the steam escape grooves 86 of FIG. 10, although both the steam escape grooves 84 and 86 exhibit an effect to make uniform a pressure distribution of the steam film along the widthwise direction of the glass ribbon GL, the spiral steam escape groove 84, which is formed along the circumferential direction of the roll base 80, attains a higher ratio of making the steam escape per unit area than the linear steam escape grooves 86 formed along the shaft direction. It is noted that the depth of the steam escape grooves 84 and 86 is preferably 1 to 3 mm and their width is also preferably 1 to 3 mm.

The glass ribbon GL formed by any of the flat glass production apparatuses and the flat glass producing processes described above may be used as a glass substrate for an FPD (flat panel display), glass sheet for building materials and glass sheet for the other uses.

Incidentally, although the soda-lime glass is exemplarily described in the embodiments, the invention is applicable to glass not including an alkaline component.

Although the present invention has been described in detail by referring to the specific embodiments, it will be obvious to those skilled in the art that various changes and modifications may be made. The present application is based on Japanese Patent Application filed on July 9, 2009 (Japanese Laid-Open Patent Publication No. 2009-162752).

### DESCRIPTION OF REFERENCE NUMERALS

- 10: flat glass production apparatus
- 12: glass melting furnace
- 13: lip face
- 14: forming device
- 16: roller carriage device
- 17: annealing furnace
- 18, 20, 22, 24, 26: tension roller
- 28: roller
- 30: concave groove
- 40: flat glass production apparatus
- 42: forming device
- 44, 46, 48, 50, 52: tension roller
- 54: concave groove
- 60: roll base
- 62: base
- 64: steam film forming agent
- 66: thin layer
- 68: rotating shaft
- 70: inner circumferential face
- 72: central cavity
- 80: flat glass production apparatus
- 82: forming device
- 84, 86: steam escape groove
- 100: cutting unit

## Claims

1. A flat glass production apparatus (10; 40; 80), comprising:
a molten glass ribbon supply part (12) supplying a continuous flow of molten glass (G) to a forming part (14; 42; 82) as a glass ribbon (GL) of a formable temperature;
the forming part (14; 42; 82) including a plurality of tension rollers (18, 20, 22, 24, 26; 44, 46, 48, 50, 52) for forming the glass ribbon (GL) of the formable temperature supplied from the molten glass ribbon supply part (12) into a glass ribbon (GL) of an unformable temperature; and
a carriage part (16) carrying out the glass ribbon (GL) of the unformable temperature on a downstream side of the forming part (14; 42; 82), wherein:
the plurality of tension rollers (18, 20, 22, 24, 26; 44, 46, 48, 50, 52) comprising:
each of tension rollers (18, 20, 22, 24, 26; 44, 46, 48, 50, 52) is disposed to have shaft center (18A, 20A, 22A, 24A, 26A; 44A, 46A, 48A, 50A, 52A) thereof extending in a horizontal direction and perpendicularly to a moving direction of the glass ribbon (GL);
among the plurality of tension rollers (18, 20, 22, 24, 26; 44, 46, 48, 50, 52), odd-numbered tension rollers (18, 22, 26; 44, 48, 52) from an upstream side along the moving direction of the glass ribbon (GL) are disposed on a lower face side of the glass ribbon (GL) and even-numbered tension rollers (20, 24; 46, 50) are disposed on an upper face side of the glass ribbon (GL);
with regard to an odd-numbered tension roller (18, 22, 26; 44, 48, 52) and an even-numbered tension roller (20, 24; 46, 50) adjacent on the downstream side out of the plural tension rollers (18, 20, 22, 24, 26; 44, 46, 48, 50, 52), an uppermost position of a circumferential face of the odd-numbered tension roller (18, 22, 26; 44, 48, 52) is disposed at the same level as or at a higher level than a lowermost position of a circumferential face of the even-numbered tension roller (20, 24; 46, 50), and a distance between the circumferential faces of the odd-numbered and even-numbered tension rollers (18, 20, 22, 24, 26; 44, 46, 48, 50, 52) adjacent to each other is larger than a thickness of the glass ribbon (GL) present therebetween; and
all the plurality of tension rollers (18, 20, 22, 24, 26) or all the plurality of tension rollers (46, 48, 50, 52) excluding a first tension roller (44) are steam generating tension rollers made of a roll base (60, 62) capable of containing a steam film forming agent (64) therein and having a structure in which steam generated from the steam film forming agent (64) contained in the roll base (60, 62) is supplied between a circumferential face of the tension roller (18, 20, 22, 24, 26; 46, 48, 50, 52) and a face of the glass ribbon (GL),
**characterized in that** at least a tension roller (18) disposed in a most upstream position among the odd-numbered tension rollers (18, 22, 26) out of the plurality of tension rollers (18, 20, 22, 24, 26), at least a tension roller (46) disposed in a most upstream position among the even-numbered tension rollers (46, 50) or at least two tension rollers (18, 46) disposed in a most upstream position among the odd-numbered and even-numbered tension rollers (18, 20, 22, 24, 26; 44, 46, 48, 50, 52) have, in both end portions thereof and along a circumferential direction, concave grooves (30; 54) for forming convex portions (A; B) in both end portions of the glass ribbon (GL).

2. The flat glass production apparatus (10; 40; 80) according to Claim 1, wherein
the first tension roller (18) is a steam generating tension roller having the concave grooves (30).

3. The flat glass production apparatus (10; 40; 80) according to Claim 1, wherein
the first tension roller (44) is a cooling roller cooled by a coolant introduced into a roll body thereof, and at least the tension roller (46) disposed in the most upstream position out of the even-numbered tension rollers (46, 50) has the concave grooves (54).

4. The flat glass production apparatus (10; 40; 80) according to any of Claims 1 to 3, wherein
when the first tension roller (18) has the concave grooves (30), each of subsequent odd-numbered tension rollers (22, 26) has, or when the second tension roller (46) has the concave grooves (54), each of subsequent even-numbered rollers (50) has, end portions (22C, 26C; 50C) with a smaller diameter than a diameter of a center portion (22B, 26B; 50B) thereof.

5. The flat glass production apparatus (10; 40; 80) according to any of Claims 1 to 4, wherein
an odd-numbered tension roller (18, 22, 26; 44, 48, 52) has a shaft center (18A, 22A, 26A; 44A, 48A, 52A) disposed in a position lower than a position of a shaft center (20A, 24A; 46A, 50A) of an adjacent even-numbered tension roller (20, 24; 46, 50).

6. The flat glass production apparatus (10; 40; 80) according to any of Claims 1 to 5, wherein
each of the steam generating tension rollers (18, 20, 22, 24, 26; 46, 48, 50, 52) has, on a circumferential face thereof, a groove (84, 86) for allowing steam to escape.

7. A process for producing a flat glass by making a glass ribbon (GL) of a formable temperature pass between a plurality of tension rollers (18, 20, 22, 24, 26; 44, 46, 48, 50, 52), each of which is disposed to have shaft center (18A, 20A, 22A, 24A, 26A; 44A, 46A, 48A, 50A, 52A) extending in a horizontal direction and perpendicularly to a moving direction of the glass ribbon (GL), to be formed into a glass ribbon (GL) of an unformable temperature, wherein:
the glass ribbon (GL) of the formable temperature is allowed to pass between the plurality of tension rollers(18, 20, 22, 24, 26; 44, 46, 48, 50, 52), which are disposed alternately above and below the glass ribbon (GL) with a distance between circumferential faces of adjacent tension rollers set to be larger than a thickness of the glass ribbon (GL) present therebetween; and
a steam generating tension roller (18, 20, 22, 24, 26; 46, 48, 50, 52) is used as at least one of the plurality of tension rollers (18, 20, 22, 24, 26; 44, 46, 48, 50, 52), and the glass ribbon (GL) is supported on the tension roller (18, 20, 22, 24, 26; 46, 48, 50, 52) with steam disposed between the glass ribbon (GL) and a circumferential face of the steam generating tension roller (18, 20, 22, 24, 26; 46, 48, 50, 52),
**characterized in that** convex portions (A; B) are formed in both end portions along a widthwise direction of the glass ribbon (GL) by a tension roller (18; 46) having concave grooves (30; 54) formed in both end portions thereof along a circumferential direction.

8. The process for producing a flat glass according to Claim 7, wherein
the glass ribbon (GL) of the formable temperature is first supported by a steam generating tension roller (18) having the concave grooves (30) and provided below the glass ribbon (GL) and is next supported by a steam generating tension roller (20) provided above the glass ribbon (GL).

9. The process for producing a flat glass according to Claim 7, wherein
the glass ribbon (GL) of the formable temperature is first supported and cooled by a cooling roller (44) provided below the glass ribbon (GL) and is next supported by a steam generating tension roller (46) having the concave grooves (54) and provided above the glass ribbon (GL).

10. The process for producing a flat glass according to Claim 7, wherein
the glass ribbon (GL) of the formable temperature is first supported by a steam generating tension roller (18) having the concave grooves (30) and provided below the glass ribbon (GL) and is next supported by a steam generating tension roller (46) having the concave grooves (54) and provided above the glass ribbon (GL).

11. The process for producing a flat glass according to any of Claims 7 to 10, wherein
the glass ribbon (GL) has, in a position immediately before coming into contact with a first tension roller (18; 44), a formable temperature corresponding to a viscosity of approximately 10^{2.0} to 3.9 Pa·s, and has, in a position immediately after coming into contact with a final tension roller (26; 52), an unformable temperature corresponding to a viscosity of approximately 10^{6.4} Pa·s.

12. The process for producing a flat glass according to any of Claims 7 to 11, wherein
the steam generating tension roller (18, 20, 22, 24, 26; 46, 48, 50, 52) is rotated in a reverse direction to a moving direction of the glass ribbon (GL), or when the steam generating tension roller (18, 20, 22, 24, 26; 46, 48, 50, 52) is rotated in a forward direction, the steam generating tension roller (18, 20, 22, 24, 26; 46, 48, 50, 52) is rotated at a circumferential speed 1.1 times or more as high as a moving speed of the glass ribbon (GL).

13. The process for producing a flat glass according to any of Claims 7 to 12, wherein
the glass ribbon (GL) of the unformable temperature is annealed and cut thereafter.

## Patentansprüche

1. Flachglasherstellungsvorrichtung (10; 40; 80), umfassend:
einen Glasschmelzebandzuführteil (12), der einen kontinuierlichen Strom von Glasschmelze (G) zu einem Formteil (14; 42; 82) als ein Glasband (GL) formbarer Temperatur zuführt;
wobei der Formteil (14; 42; 82) eine Mehrzahl von Spannrollen (18, 20, 22, 24, 26; 44, 46, 48, 50, 52) zum Formen des Glasbands (GL) formbarer Temperatur, das von dem Glasschmelzebandzuführteil (12) zugeführt wird, zu einem Glasband (GL) nicht formbarer Temperatur; und
einen Wagenteil (16), der das Glasband (GL) nicht formbarer Temperatur auf einer stromabwärtigen Seite des Formteils (14; 42; 82) ausführt bzw. trägt, wobei:
die Mehrzahl von Spannrollen (18, 20, 22, 24, 26; 44, 46, 48, 50, 52) umfasst:
jede der Spannrollen (18, 20, 22, 24, 26; 44, 46, 48, 50, 52) ist so angeordnet, dass ihre Wellenmitte (18A, 20A, 22A, 24A, 26A; 44A, 46A, 48A, 50A, 52A) sich in einer horizontalen Richtung und senkrecht zu einer Bewegungsrichtung des Glasbands (GL) erstreckt;
wobei aus der Mehrzahl von Spannrollen (18, 20, 22, 24, 26; 44, 46, 48, 50, 52) ungradzahlige Spannrollen (18, 22, 26; 44, 48, 52) von einer stromaufwärtigen Seite entlang der Bewegungsrichtung des Glasbands (GL) an bzw. auf einer unteren Flächenseite des Glasbands (GL) angeordnet sind und gradzahlige Spannrollen (20, 24; 46, 50) an bzw. auf einer oberen Flächenseite des Glasbands (GL) angeordnet sind;
wobei bezüglich einer ungradzahligen Spannrolle (18, 22, 26; 44, 48, 52) und einer gradzahligen Spannrolle (20, 24; 46, 50), angrenzend bzw. benachbart auf der stromabwärtigen Seite, aus der Mehrzahl von Spannrollen (18, 20, 22, 24, 26; 44, 46, 48, 50, 52) eine oberste Position einer Umfangsfläche der ungradzahligen Spannrolle (18, 22, 26; 44, 48, 52) auf dergleichen Ebene wie oder auf einer höheren Ebene als eine unterste Position einer Umfangsfläche der gradzahligen Spannrolle (20, 24; 46, 50) angeordnet ist und ein Abstand zwischen den Umfangsflächen der ungradzahligen und gradzahligen Spannrollen (18, 20, 22, 24, 26; 44, 46, 48, ,50, 52) angrenzend bzw. benachbart zueinander, größer ist als eine Dicke des Glasbands (GL), das sich dazwischen befindet; und
wobei alle die Mehrzahl von Spannrollen (18, 20, 22, 24, 26) oder alle die Mehrzahl von Spannrollen (46, 48, 50, 52), ausgenommen einer ersten Spannrolle (44), dampferzeugende Spannrollen sind, die aus einer Rollenbasis (60, 62) bestehen, die in der Lage ist, ein Dampffilmbildungsmittel (64) darin zu enthalten und eine Struktur aufzuweisen, bei der Dampf, der aus dem Dampffilmbildungsmittel (64) erzeugt wird, das in der Rollenbasis (60, 62) enthalten ist, zwischen einer Umfangsfläche der Spannrollen (18, 20, 22, 24, 26; 46, 48, 50, 52) und einer Fläche des Glasbands (GL) zugeführt wird,
**dadurch gekennzeichnet, dass** zumindest eine Spannrolle (18), die in einer am weitesten stromaufwärtigen Position aus den ungradzahligen Spannrollen (18, 22, 26) aus der Mehrzahl von Spannrollen (18, 20, 22, 24, 26) angeordnet ist, zumindest eine Spannrolle (46), die in einer am weitesten stromaufwärtigen Position von den gradzahligen Spannrollen (46, 50) angeordnet ist, oder zumindest zwei Spannrollen (18, 46), die in einer am weitesten stromaufwärtigen Position von den ungradzahligen und gradzahligen Spannrollen (18, 20, 22, 24, 26; 44, 46, 48, 50, 52) angeordnet ist, in beiden Endabschnitten davon und entlang einer Umfangsrichtung konkave Nuten bzw. Rillen (30, 54) zum Formen von konvexen Abschnitten (A; B) in beiden Endabschnitten des Glasbands (GL) aufweisen.

2. Flachglasherstellungsvorrichtung (10; 40; 80) nach Anspruch 1, wobei die erste Spannrolle (18) eine dampferzeugende Spannrolle ist, welche die konkaven Nuten (30) aufweist.

3. Flachglasherstellungsvorrichtung (10; 40; 80) nach Anspruch 1, wobei die erste Spannrolle (44) eine Kühlrolle ist, die durch ein Kühlmittel gekühlt wird, das in einen Rollenkörper davon eingebracht ist, und zumindest die Spannrolle (46), die in der am weitesten stromaufwärtigen Position von den gradzahligen Spannrollen (46, 50) angeordnet ist, die konkaven Nuten (54) aufweist.

4. Flachglasherstellungsvorrichtung (10; 40; 80) nach einem der Ansprüche 1 bis 3, wobei, wenn die erste Spannrolle (18) die konkaven Nuten (30) aufweist, jede von nachfolgenden ungradzahligen Spannrollen (22, 26), oder wenn die zweite Spannrolle (46) die konkaven Nuten (54) aufweist, jede von nachfolgenden gradzahligen Rollen (50) Endabschnitte (22C, 26C; 50C) mit einem kleinerem Durchmesser als einem Durchmesser eines Mittelabschnitts (22B, 26B; 50B) davon aufweist.

5. Flachglasherstellungsvorrichtung (10; 40; 80) nach einem der Ansprüche 1 bis 4, wobei eine ungradzahlige Spannrolle (18, 22, 26; 44, 48, 52) eine Wellenmitte (18A, 22A, 26A; 44A, 48A, 52A) aufweist, die in einer Position niedriger als eine Position einer Wellenmitte (20A, 24A; 46A, 50A) einer angrenzenden bzw. benachbarten Spannrolle (20, 24; 46, 50) angeordnet ist.

6. Flachglasherstellungsvorrichtung (10; 40; 80) nach einem der Ansprüche 1 bis 5, wobei jede der dampferzeugenden Spannrollen (18, 20, 22, 24, 26; 46, 48, 50, 52) an einer Umfangsfläche davon eine Nut bzw. Rille (84, 86) aufweist, die Dampf erlaubt, auszutreten.

7. Verfahren zum Herstellen eines Flachglases durch Veranlassen, dass ein Glasband (GL) vormbarer Temperatur zwischen einer Mehrzahl von Spannrollen (18, 20, 22, 24, 26; 44, 46, 48, 50, 52) verläuft, von denen jede so angeordnet ist, dass ihre Wellenmitte (18A, 20A, 22A, 24A, 26A; 44A, 46A, 48A, 50A, 52A) sich in einer horizontalen Richtung und senkrecht zu einer Bewegungsrichtung des Glasbands (GL) erstreckt, das zu einem Glasband (GL) nicht formbarer Temperatur zu formen ist, wobei:
das Glasband (GL) formbarer Temperatur zwischen der Mehrzahl von Spannrollen (18, 20, 22, 24, 26; 44, 46, 48, 50, 52) verlaufen darf, die abwechselnd über und unter dem Glasband (GL) angeordnet sind, und zwar mit einem Abstand zwischen Umfangsflächen von angrenzenden bzw. benachbarten Spannungsrollen, der größer festgelegt ist als eine Dicke des Glasbands (GL), das sich dazwischen befindet; und
wobei eine dampferzeugende Spannrolle (18, 20, 22, 24, 26; 46, 48, 50, 52) als zumindest eine der Mehrzahl von Spannrollen (18, 20, 22, 24, 26; 44, 46, 48, 50, 52) verwendet wird und das Glasband (GL) an der Spannrolle (18, 20, 22, 24, 26; 46, 48, 50, 52) gestützt bzw. getragen ist, wobei Dampf zwischen dem Glasband (GL) und einer Umfangsfläche der dampferzeugenden Spannrolle (18, 20, 22, 24, 26; 46, 48, 50, 52) angeordnet wird,
**dadurch gekennzeichnet, dass** konvexe Abschnitte (A; B) in beiden Endabschnitten entlang einer Breitenrichtung des Glasbands (GL) durch eine Spannrolle (18; 46) gebildet werden, die konkave Nuten bzw. Rillen (30; 54) aufweist, die in beiden Endabschnitten davon entlang einer Umfangsrichtung gebildet sind.

8. Verfahren zum Herstellen eines Flachglases nach Anspruch 7, wobei das Glasband (GL) formbarer Temperatur zunächst durch eine dampferzeugende Spannrolle (18) gestützt bzw. getragen wird, welche die konkaven Nuten (30) aufweist und unter dem Glasband (GL) bereitgestellt ist, und als nächstes durch eine dampferzeugende Spannrolle (20) gestützt bzw. getragen wird, die über dem Glasband (GL) bereitgestellt ist.

9. Verfahren zum Herstellen eines Flachglases nach Anspruch 7, wobei das Glasband (GL) formbarer Temperatur zunächst durch eine Kühlrolle (44) gestützt bzw. getragen und gekühlt wird, die unter dem Glasband (GL) bereitgestellt ist, und als nächstes durch eine dampferzeugende Spannrolle (46) gestützt bzw. getragen wird, welche die konkaven Nuten (54) aufweist und über dem Glasband (GL) bereitgestellt ist.

10. Verfahren zum Herstellen eines Flachglases nach Anspruch 7, wobei das Glasband (GL) formbarer Temperatur zunächst durch eine dampferzeugende Spannrolle (18) gestützt bzw. getragen wird, welche die konkaven Nuten (30) aufweist und unter dem Glasband (GL) bereitgestellt ist, und als nächstes durch eine dampferzeugende Spannrolle (46) gestützt bzw. getragen wird, welche die konkaven Nuten (54) aufweist und über dem Glasband (GL) bereitgestellt ist.

11. Verfahren zum Herstellen eines Flachglases nach einem der Ansprüche 7 bis 10, wobei das Glasband (GL) in einer Position unmittelbar bevor es mit einer ersten Spannrolle (18; 44) in Kontakt kommt eine formbare Temperatur aufweist, die einer Viskosität von näherungsweise 10^{2.0 bis 3.9} Pa.s entspricht, und in einer Position unmittelbar nachdem es mit einer letzten Spannrolle (26; 52) in Kontakt kommt eine nicht formbare Temperatur aufweist, die einer Viskosität von näherungsweise 10^{6.4} Pa.s entspricht.

12. Verfahren zum Herstellen eines Flachglases nach einem der Ansprüche 7 bis 11, wobei die dampferzeugende Spannrolle (18, 20, 22, 24, 26; 46, 48, 50, 52) in einer entgegengesetzten Richtung zu einer Bewegungsrichtung des Glasbands (GL) gedreht wird oder, wenn die dampferzeugende Spannrolle (18, 20, 22, 24, 26; 46, 48, 50, 52) in einer Vorwärtsrichtung gedreht wird, die dampferzeugende Spannrolle (18, 20, 22, 24, 26; 46, 48, 50, 52) mit einer Umfangsgeschwindigkeit gedreht wird, die 1,1 Mal oder mehr höher ist als eine Bewegungsgeschwindigkeit des Glasbands (GL).

13. Verfahren zum Herstellen eines Flachglases nach einem der Ansprüche 7 bis 12, wobei das Glasband (GL) nicht formbarer Temperatur gehärtet und danach geschnitten wird.

## Revendications

1. Appareil de production de verre plat (10 ; 40 ; 80) comprenant :
une partie d'alimentation en ruban de verre fondu (12) fournissant un flux continu de verre fondu (G) à une partie de formation (14 ; 42 ; 82) comme ruban de verre (GL) d'une température façonnable ;
la partie de formation (14 ; 42 ; 82) incluant une pluralité de rouleaux de tension (18, 20, 22, 24, 26 ; 44, 46, 48, 50, 52) pour former le ruban de verre (GL) de la température façonnable fourni depuis la partie d'alimentation en ruban de verre fondu (12) en un ruban de verre (GL) d'une température non façonnable ; et
une partie de chariot (16) emmenant le ruban de verre (GL) de la température non façonnable sur un côté aval de la partie de formation (14 ; 42 ; 82), dans lequel :
la pluralité de rouleaux de tension (18, 20, 22, 24, 26 ; 44, 46, 48, 50, 52) comprenant :
chacun des rouleaux de tension (18, 20, 22, 24, 26 ; 44, 46, 48, 50, 52) est disposé pour avoir un centre d'arbre (18A, 20A, 22A, 24A, 26A ; 44A, 46A, 48A, 50A, 52A) de celui-ci s'étendant dans une direction horizontale et perpendiculairement à une direction de déplacement du ruban de verre (GL) ;
parmi la pluralité de rouleaux de tension (18, 20, 22, 24, 26 ; 44, 46, 48, 50, 52), les rouleaux de tension à nombre impair (18, 22, 26 ; 44, 48, 52) provenant d'un côté amont le long de la direction de déplacement du ruban de verre (GL) sont disposés sur un côté de face inférieure du ruban de verre (GL) et les rouleaux de tension à nombre pair (20, 24 ; 46, 50) sont disposés sur un côté de face supérieure du ruban de verre (GL) ;
en ce qui concerne un rouleau de tension à nombre impair (18, 22, 26 ; 44, 48, 52) et un rouleau de tension à nombre pair (20, 24 ; 46, 50) adjacent au côté aval parmi la pluralité de rouleaux de tension (18, 20, 22, 24, 26 ; 44, 46, 48, 50, 52), une position la plus haute d'une face circonférentielle du rouleau de tension à nombre impair (18, 22, 26 ; 44, 48, 52) est disposée au même niveau que ou à un niveau supérieur à une position la plus basse d'une face circonférentielle du rouleau de tension à nombre pair (20, 24 ; 46, 50), et une distance entre les faces circonférentielles des rouleaux de tension à nombre impair et nombre pair (18, 20, 22, 24, 26 ; 44, 46, 48, 50, 52) adjacents les uns aux autres est supérieure à une épaisseur du ruban de verre (GL) présent entre elles ; et
toute la pluralité de rouleaux de tension (18, 20, 22, 24, 26) ou toute la pluralité de rouleaux de tension (46, 48, 50, 52) à l'exclusion d'un premier rouleau de tension (44) sont des rouleaux de tension générateurs de vapeur constitués d'une base de roulement (60, 62) capable de contenir un agent formateur de film de vapeur (64) en son sein et ayant une structure dans laquelle de la vapeur générée entre l'agent formateur de film de vapeur (64) contenu dans la base de roulement (60, 62) est fournie entre une face circonférentielle du rouleau de tension (18, 20, 22, 24, 26 ; 46, 48, 50, 52) et une face du ruban de verre (GL),
**caractérisé en ce qu'**au moins un rouleau de tension (18) disposé dans une position la plus en amont parmi les rouleaux de tension à nombre impair (18, 22, 26) parmi la pluralité de rouleaux de tension (18, 20, 22, 24, 26), au moins un rouleau de tension (46) disposé dans une position la plus en amont parmi les rouleaux de tension à nombre pair (46, 50) ou au moins deux rouleaux de tension (18, 46) disposés dans une position la plus en amont parmi les rouleaux de tension à nombre impair et nombre pair (18, 20, 22, 24, 26 ; 44, 46, 48, 50, 52) ont, dans les deux portions d'extrémité de ceux-ci et le long d'une direction circonférentielle, des rainures concaves (30 ; 54) pour former des portions convexes (A ; B) dans les deux portions d'extrémité du ruban de verre (GL).

2. Appareil de production de verre plat (10 ; 40 ; 80) selon la revendication 1, dans lequel
le premier rouleau de tension (18) est un rouleau de tension générateur de vapeur ayant les rainures concaves (30).

3. Appareil de production de verre plat (10 ; 40 ; 80) selon la revendication 1, dans lequel
le premier rouleau de tension (18) est un rouleau de refroidissement refroidi par un réfrigérant introduit dans un corps de roulement de celui-ci et au moins le rouleau de tension (46) disposé dans la position la plus en amont parmi les rouleaux de tension à nombre pair (46, 50) a les rainures concaves (54).

4. Appareil de production de verre plat (10 ; 40 ; 80) selon l'une quelconque des revendications 1 à 3, dans lequel
lorsque le premier rouleau de tension (18) a les rainures concaves (30), chacun des rouleaux de tension à nombre impair subséquents (22, 26) a, ou lorsque le deuxième rouleau de tension (46) a les rainures concaves (54), chacun des rouleaux à nombre pair subséquents (50) a, des portions d'extrémité (22C, 26C ; 50C) avec un diamètre inférieur à un diamètre d'une portion centrale (22B, 26B ; 50B) de celui-ci.

5. Appareil de production de verre plat (10 ; 40 ; 80) selon l'une quelconque des revendications 1 à 4, dans lequel
un rouleau de tension à nombre impair (18, 22, 26 ; 44, 48, 52) a un centre d'arbre (18A, 22A, 26A ; 44A, 48A, 52A) disposé en une position inférieure à une position d'un centre d'arbre (20A, 24A ; 46A, 50A) d'un rouleau de tension à nombre pair adjacent (20, 24 ; 46, 50).

6. Appareil de production de verre plat (10 ; 40 ; 80) selon l'une quelconque des revendications 1 à 5, dans lequel
chacun des rouleaux de tension générateurs de vapeur (18, 20, 22, 24, 26 ; 46, 48, 50, 52) a sur une face circonférentielle de celui-ci une rainure (84, 86) pour permettre à de la vapeur de s'échapper.

7. Procédé de production d'un verre plat en faisant passer un ruban de verre (GL) d'une température façonnable entre une pluralité de rouleaux de tension (18, 20, 22, 24, 26 ; 44, 46, 48, 50, 52) dont chacun est disposé pour avoir un centre d'arbre (18A, 20A, 22A, 24A, 26A ; 44A, 46A, 48A, 50A, 52A) s'étendant dans une direction horizontale et perpendiculairement à une direction de déplacement du ruban de verre (GL), devant être formé en un ruban de verre (GL) d'une température non façonnable, dans lequel :
le ruban de verre (GL) de la température façonnable est autorisé à passer entre la pluralité de rouleaux de tension (18, 20, 22, 24, 26 ; 44, 46, 48, 50, 52) qui sont disposés en alternance au-dessus et en dessous du ruban de verre (GL) avec une distance entre des faces circonférentielles de rouleaux de tension adjacents réglée pour être supérieure à une épaisseur du ruban de verre (GL) présent entre elles ; et
un rouleau de tension générateur de vapeur (18, 20, 22, 24, 26 ; 46, 48, 50, 52) est utilisé comme au moins un de la pluralité de rouleaux de tension (18, 20, 22, 24, 26 ; 44, 46, 48, 50, 52) et le ruban de verre (GL) est supporté sur le rouleau de tension (18, 20, 22, 24, 26 ; 46, 48, 50, 52) avec de la vapeur disposée entre le ruban de verre (GL) et une face circonférentielle du rouleau de tension générateur de vapeur (18, 20, 22, 24, 26 ; 46, 48, 50, 52),
**caractérisé en ce que** des portions convexes (A ; B) sont formées dans les deux portions d'extrémité le long d'un sens de la largeur du ruban de verre (GL) par un rouleau de tension (18 ; 46) ayant des rainures concaves (30 ; 54) formées dans les deux portions d'extrémité de celui-ci le long d'une direction circonférentielle.

8. Procédé de production d'un verre plat selon la revendication 7, dans lequel le ruban de verre (GL) de la température façonnable est d'abord supporté par un rouleau de tension générateur de vapeur (18) ayant les rainures concaves (30) et prévu en dessous du ruban de verre (GL), et est ensuite supporté par un rouleau de tension générateur de vapeur (20) prévu au-dessus du ruban de verre (GL).

9. Procédé de production d'un verre plat selon la revendication 7, dans lequel le ruban de verre (GL) de la température façonnable est d'abord supporté et refroidi par un rouleau de refroidissement (44) prévu en dessous du ruban de verre (GL), et est ensuite supporté par un rouleau de tension générateur de vapeur (46) ayant les rainures concaves (54) et prévu au-dessus du ruban de verre (GL).

10. Procédé de production d'un verre plat selon la revendication 7, dans lequel le ruban de verre (GL) de la température façonnable est d'abord supporté par un rouleau de tension générateur de vapeur (18) ayant les rainures concaves (30) et prévu en dessous du ruban de verre (GL), et est ensuite supporté par un rouleau de tension générateur de vapeur (46) ayant les rainures concaves (54) et prévu au-dessus du ruban de verre (GL).

11. Procédé de production d'un verre plat selon l'une quelconque des revendications 7 à 10, dans lequel
le ruban de verre (GL) a, dans une position immédiatement avant de venir en contact avec un premier rouleau de tension (18 ; 44), une température façonnable correspondant à une viscosité d'environ 10^{2,0 à 3,9} Pa.s et a, dans une position immédiatement après être venu en contact avec un rouleau de tension final (26 ; 52), une température non façonnable correspondant à une viscosité d'environ 10^{6,4} Pa.s.

12. Procédé de production d'un verre plat selon l'une quelconque des revendications 7 à 11, dans lequel
le rouleau de tension générateur de vapeur (18, 20, 22, 24, 26 ; 46, 48, 50, 52) est tourné dans une direction inverse à une direction de déplacement du ruban de verre (GL) ou, lorsque le rouleau de tension générateur de vapeur (18, 20, 22, 24, 26 ; 46, 48, 50, 52) est tourné dans une direction vers l'avant, le rouleau de tension générateur de vapeur (18, 20, 22, 24, 26 ; 46, 48, 50, 52) est tourné à une vitesse circonférentielle 1,1 fois aussi élevée ou plus qu'une vitesse de déplacement du ruban de verre (GL).

13. Procédé de production d'un verre plat selon l'une quelconque des revendications 7 à 12, dans lequel
le ruban de verre (GL) de la température non façonnable est recuit et découpé ci-après.
